# EUROPEAN PATENT APPLICATION

(11) **EP 4 576 356 A1**
(43) Date of publication of application: **25.06.2025**
(21) Application number: 23219202.1
(22) Date of filing: 21.12.2023
(51) Int. Cl.: H01M 50/204

(54) **INTERCONNECTION OF SETS OF ENERGY STORAGE MODULES**

(71) Applicant: VOLVO TRUCK CORPORATION, 405 08 Göteborg (SE)
(72) Inventor: RAGOT, Sebastien, 413 11 GÖTEBORG (SE); LANDVIK, Sondre, 417 61 GÖTEBORG (SE); JOHANSSON, Fredrik, 462 94 FRÄNDEFORS (SE); ERIKSSON, Urban, 408 08 GÖTEBORG (SE); TAJUDDIN, Mohammad Ansari, 417 17 GÖTEBORG (SE); ALBERT, Ioana, 417 27 GÖTEBORG (SE); JONZON, Daniel, 436 56 HOVÅS (SE); HÖRDER, Jonatan, 431 34 MÖLNDAL (SE)
(74) Representative: Kransell & Wennborg KB

(57) **Abstract**

The present disclosure relates to an energy storage arrangement. The energy storage arrangement comprises a sleeve arranged in a first and a second through hole, the sleeve being arranged through a first end surface of a first set of energy storage modules and through a first end surface of a second set of energy storage modules and is connected to a first and a second rod.

## Description

### TECHNICAL FIELD

The disclosure relates generally to energy storage arrangements. In particular aspects, the disclosure relates to interconnection of sets of energy storage systems. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

The propulsion systems of vehicles are continuously developed to meet the demands from the market. A particular aspect relates to the emission of environmentally harmful exhaust gas. Therefore, vehicles propelled by electric traction motors have been increasingly popular, both for cars as well as for trucks and other heavy duty vehicles.

For heavy duty vehicles, the energy storage arrangements, often in the form of traction batteries, need to be relatively large in size to be able to contain a sufficient level of energy such that the vehicle can be operated at an acceptable range using the electric traction motors. The large energy storage arrangements are in turn of substantial weight, and there is a challenged to position and assemble these energy storage systems to the frame of the heavy duty vehicle.

### SUMMARY

According to a first aspect of the disclosure, there is provided an energy storage arrangement for a vehicle, the energy storage arrangement comprising a first set of energy storage modules comprising at least one energy storage module, the first set of energy storage modules comprising a first side surface, a first end surface, and a second end surface, wherein the first side surface extends between the first and second end surfaces of the first set of energy storage modules, a first rod arranged in a first through hole of the first set of energy storage modules, the first rod extending between the first and second end surfaces of the first set of energy storage modules, a second set of energy storage modules comprising at least one energy storage module, the second set of energy storage modules comprising a second side surface, a first end surface, and a second end surface, wherein the second side surface extends between the first and second end surfaces of the second set of energy storage modules, wherein the first end surface of the first set of energy storage modules face the first end surface of the second set of energy storage modules, a second rod arranged in a second through hole of the second set of energy storage modules, the second rod extending between the first and second end surfaces of the second set of energy storage modules, wherein the energy storage arrangement further comprises a sleeve arranged in the first and second through holes, the sleeve being arranged through the first end surface of the first set of energy storage modules and through the first end surface of the second set of energy storage modules and is connected to the first and second rods.

The first aspect of the disclosure may seek to at least partly mitigate the problem of difficult and non-secure interconnection of a plurality of energy storage modules connected to each other. A technical benefit may include that an energy storage arrangement with at least two sets of energy storage modules is securely and efficiently connected to each other. By connecting at least two sets of energy storage modules to each other, the energy storage arrangement can obtain a relatively large maximum state of charge level which in turn may enable for a relatively long range of operation before charging is required.

Furthermore, using a first rod for the first set of energy storage modules, and a second rod for the second set of energy storage modules, the respective set of energy storage modules can be pre-tensioned in a reliable manner with a sufficient compression, and subsequently connected to each other. In addition, a total relatively large energy storage arrangement can be provided without having to use long rods arranged through each of the first and second sets of energy storage module. Instead, shorter first and second rods can be used which enables for a more secure connection. Using longer rods may result in the clamping length, also conventionally referred to as a grip length, being too long which may increase the risk of loosening bolts over time. Replacing a relatively long rod with the first and second rods, i.e. two shorter rods, the same type of rods can be used for various numbers of energy storage modules forming the energy storage arrangement. Hence, an improved modularity can be obtained.

In addition, the first aspect of the disclosure may also enable for simplified access when mounting the first and second sets of energy storage modules to each other. In detail, the first rod can be tightened, using e.g. a nut, from the second end surface of the first set of energy storage modules, and the second rod can be tightened from the second end surface of the second set of energy storage modules. The second end surfaces of the corresponding first and second sets of energy storage modules should preferably be construed as surfaces extending in a plane which is perpendicular to a longitudinal extension of the vehicle when the energy storage system is connected to a frame of the vehicle. The first side surface is thus preferably a surface extending in a plane which is parallel with the longitudinal extension of the vehicle when the energy storage system is connected to the frame of the vehicle.

Optionally in some examples, including in at least one preferred example, the sleeve is non-rotatably connected to the first through hole. Hence, the sleeve may be rotationally fixed to the first through hole. A technical benefit may include that the second rod can be connected to the sleeve without having to hold the sleeve fixed with e.g. an external tool which may be difficult to insert in the area at which the sleeve is positioned.

Optionally in some examples, including in at least one preferred example, the sleeve comprises a first sleeve portion arranged in a non-rotatable abutment with an abutment portion of the first through hole. Hence, the first sleeve portion may be arranged in a rotationally fixed abutment with the abutment portion of the first through hole. A technical benefit may include that the surface of the abutment portion of the first through hole can be adapted and designed to mate with the surface of the first sleeve portion of the sleeve to form a secure non-rotatable connection therebetween.

Optionally in some examples, including in at least one preferred example, the first sleeve portion is an oblong shaped portion arranged in abutment with the abutment portion of the first through hole, the abutment portion of the first through hole being an internal oblong shaped portion.

Optionally in some examples, including in at least one preferred example, the first and second rods are connected to internal threads of the sleeve. A technical benefit may include that the first and second rods can be securely connected to the sleeve. As will be described further below, the sleeve may be pre-mounted to the first rod. Thereafter, the first rod may be inserted into the first through hole from the first end surface and guided to the second end surface. The rod may subsequently be fixated at the second end surface of the first set of energy storage modules. Thereafter, the second rod may be guided through the second through hole from the second end surface of the second set of energy storage modules, and guided to the first side surface of the second set of energy storage modules. The second rod is thereafter threaded to the sleeve by rotating the second rod at the second end surface of the second set of energy storage modules. Since the first side surface of the first set of energy storage modules is more or less in abutment with the first side surface of the second set of energy storage modules, the connection between the sleeve and the second rod is more or less blind. A technical benefit of connecting the first and second rods to the sleeve by threads is thus that an operator does not need to visually monitor the connecting step, at least not the connection of the second rod to the sleeve.

Optionally in some examples, including in at least one preferred example, the sleeve comprises a first portion and a second portion, the first sleeve portion forming part of the first portion, wherein the internal threads are arranged at the second portion of the sleeve, the second portion extending away from the first through hole. A technical benefit may include that an external surface of the second portion can extend in a direction away from the first through hole and thereby act as a guiding pin when arranging the first and second sets of energy storage modules to connect to each other.

Optionally in some examples, including in at least one preferred example, the first end surface of the first set of energy storage modules comprises at least one aperture, and a guiding pin arranged in the at least one aperture. A technical benefit may be that simplified guidance of the second set of energy storage modules when being connected to the first set of energy storage modules.

Optionally in some examples, including in at least one preferred example, the first end surface of the second set of energy storage modules comprises at least one aperture, wherein the guiding pin is arranged in the at least one aperture of the first end surface of the second set of energy storage modules. A technical benefit may be that the guiding pin can increase the shear strength of the interface between the first and second sets of energy storage modules. Thus, the guiding pin can support the energy storage arrangement by absorbing at least a portion of potential shear forces acting on the interface between the first and second sets of energy storage modules.

Optionally in some examples, including in at least one preferred example, the first set of energy storage modules comprises two energy storage modules.

Optionally in some examples, including in at least one preferred example, the second set of energy storage modules comprises two energy storage modules.

Optionally in some examples, including in at least one preferred example, the energy storage arrangement further comprises a first protection plate attached to the second end surface of the first set of energy storage modules. A technical benefit may include that the second end surface of the first set of energy storage modules can be protected from external loads during operation of the vehicle, such as e.g. stones or smaller rocks from the ground surface hitting the energy storage arrangement, or from impact such as e.g. a wheel bumping into the energy storage arrangement when, for example, the wheel hits a guardrail, etc. Also, the first protection plate may serve as an attachment position for auxiliaries of the vehicle. Hence, components can be attached to the first protection plate thereby saving space at other positions of the vehicle at which such components would otherwise be arranged.

Optionally in some examples, including in at least one preferred example, the first rod is arranged through a first opening of the first protection plate, the first protection plate being attached to the second end surface of the first set of energy storage modules by a nut connected to the first rod. A technical benefit may be that the first protection plate is securely attached to the second end surface of the first set of energy storage modules in a simple manner.

Optionally in some examples, including in at least one preferred example, the energy storage arrangement further comprises a second protection plate attached to the second end surface of the second set of energy storage modules. A technical benefit may include that the second end surface of the second set of energy storage modules can be protected from external loads that may hit the energy storage arrangement during operation of the vehicle, such as e.g. stones or smaller rocks from the ground surface hitting the energy storage arrangement. Also, and in a similar vein as for the first protection plate, the second protection plate may serve as an attachment position for auxiliaries of the vehicle. Hence, components can also be attached to the second protection plate thereby saving space at other positions of the vehicle at which such components would otherwise be arranged.

Optionally in some examples, including in at least one preferred example, the second rod is arranged through a second opening of the second protection plate, the second protection plate being attached to the second end surface of the second set of energy storage modules by a nut connected to the second rod. A technical benefit may be that the first protection plate is securely attached to the second end surface of the first set of energy storage modules in a simple manner.

Optionally in some examples, including in at least one preferred example, the first rod is arranged in parallel with the first side surface of the first set of energy storage modules.

Optionally in some examples, including in at least one preferred example, the second rod is arranged in parallel with the second side surface of the second set of energy storage modules.

According to a second aspect, there is provided a vehicle comprising an energy storage arrangement according to any one of the examples described above in relation to the first aspect.

Effects and features of the second aspect are largely analogous to those described above in relation to the first aspect.

According to a third aspect, there is provided a method of assembling an energy storage arrangement, the energy storage arrangement comprising a first set of energy storage modules comprising at least one energy storage module and a second set of energy storage modules comprising at least one energy storage module, the method comprising attaching a sleeve to a first end portion of a first rod, guiding a second end portion of the first rod through a first through hole of the first set of energy storage modules, the second end portion being guided from a first end surface to a second end surface of the first set of energy storage modules until the sleeve is arranged in the first through hole, the first and second end portions of the first rod being arranged on opposite ends of the first rod, connecting the second end portion of the first rod to the second end surface of the first set of energy storage modules, guiding a first end portion of a second rod through a second through hole of the second set of energy storage modules, the first end portion being guided from a second end surface to a first end surface of the second set of energy storage modules, attaching the first end portion of the second rod to the sleeve, and connecting the second end portion of the second rod to the second end surface of the second set of energy storage modules, the first and second end portions of the second rod being arranged on opposite ends of the second rod.

The second aspect of the disclosure aims at simplifying the connection of a first and second sets of energy storage modules to each other. A technical benefit may be, in addition to the advantages described above in relation to the first aspect, that a complete unit of the energy storage arrangement can be assembled step by step in a simple and efficient manner.

Optionally in some examples, including in at least one preferred example, further comprising guiding the second end portion of the first rod through a first protection plate, and connecting the second end portion of the first rod to the second end surface of the first set of energy storage modules by attaching a first nut to the second end portion of the first rod to sandwich the first protection plate between the first nut and the second end surface of the first set of energy storage modules.

Optionally in some examples, including in at least one preferred example, further comprising guiding the first end portion of the second rod through a second protection plate, and connecting the second end portion of the second rod to the second end surface of the second set of energy storage modules by attaching a second nut to the second end portion of the second rod to sandwich the second protection plate between the second nut and the second end surface of the second set of energy storage modules.

Further effects and features of the third aspect are largely analogous and combinable with the effects and features of the first aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
Fig. 1 is an exemplary illustration of a vehicle according to an example,
Fig. 2 is an exemplary exploded view of an energy storage arrangement connected to a frame of the vehicle according to an example,
Fig. 3A is an exemplary illustration of a first set of energy storage modules of the energy storage arrangement according to an example,
Fig. 3B is an exemplary illustration of the first set of energy storage modules and a second set of energy storage modules of the energy storage arrangement according to an example,
Fig. 4 is an exemplary flow chart of a method of assembling an energy storage arrangement according to an example, and
Fig. 5 is an exemplary illustration of one energy storage module of the first set of energy storage modules.

### DETAILED DESCRIPTION

The detailed description set forth below provides information and examples of the disclosed technology with sufficient detail to enable those skilled in the art to practice the disclosure.

The following disclosure aims at minimizing the problem of difficult and non-secure interconnection of a plurality of energy storage modules connected to each other. A technical benefit may include that an energy storage arrangement with at least two sets of energy storage modules is securely and efficiently connected to each other. A relatively large energy storage arrangement can be provided which may enable for a relatively long range of operation for electric traction motors of the vehicle.

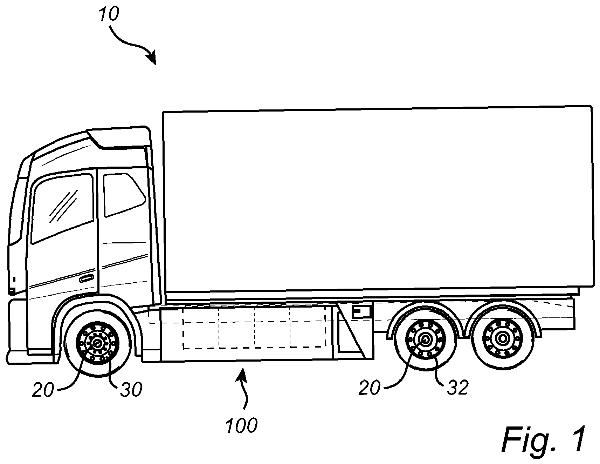

Turning to Fig. 1, which is an exemplary illustration of a vehicle 10 according to an example. The exemplified vehicle 10 is configured to be at least partly propelled by one or more electric traction motors 20. In Fig. 1, the electric traction motors 20 are exemplified as wheel hub motors connected to the pair of front wheels 30 as well as to the foremost pair of rear wheels 32. However, the vehicle 10 may alternatively comprises a single electric traction motor connected to the wheels via a conventional propulsion shaft (not shown). The at least one electric traction motor 20 is configured to apply a propulsive power to the wheels of the vehicle during propulsion, and to generate electric power during braking.

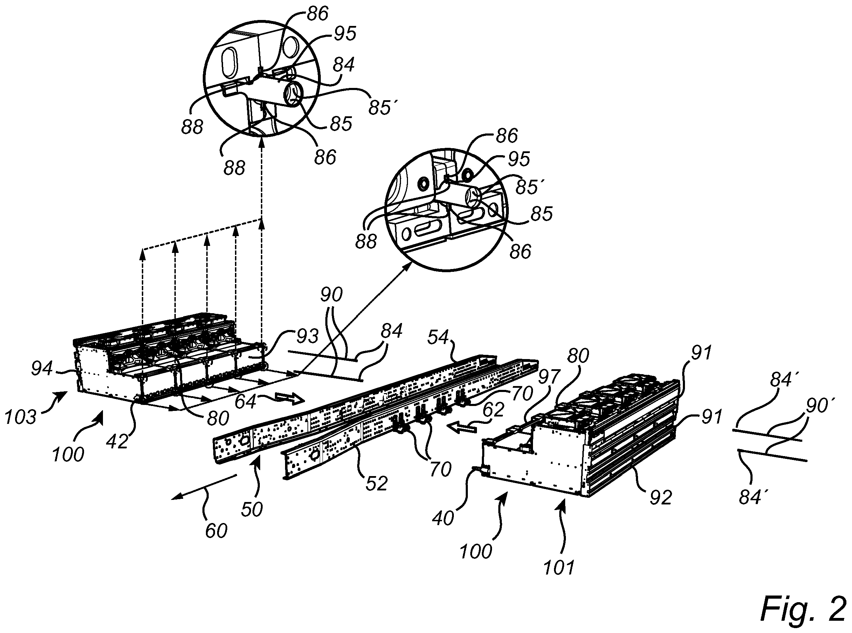

The vehicle further comprises an energy storage arrangement 100, also referred to as a high-voltage vehicle battery. The energy storage arrangement 100 is configured to feed electric power to the electric traction motor 20 during propulsion of the vehicle 10 and to receive electric power during braking. In order to describe the connection of the energy storage arrangement 100 to the frame of the vehicle 10, reference is now made to Fig. 2.

Fig. 2 is an exemplary exploded view of the energy storage arrangement 100 connected to the frame 50 of the vehicle 10 according to an example. In particular, a first energy storage arrangement 101 is arranged at a first lateral side of the frame 50, and a second energy storage arrangement 103 is arranged at a second lateral side of the frame 50. The exemplified frame 50 comprises a pair of longitudinal frame members 52, 54. Put it differently, the frame 50 comprises a first frame member 52 and a second frame member 54, wherein each of the first 52 and second 54 frame members extends in the longitudinal direction 60 of the vehicle 10. Thus, the first energy storage arrangement 101 is connected to the first frame member 52 and the second energy storage arrangement 103 is connected to the second frame member 54. Further, a plurality of vehicle frame supports 70 are connected to each of the first 52 and second 54 frame members. Also, each of the first 101 and second 103 energy storage arrangement comprises a plurality of support brackets 80. The longitudinal distance between the plurality of vehicle frame supports 70 is substantially the same as the corresponding longitudinal distance between the plurality of support brackets 80 of the first 101 and second 103 energy storage arrangements.

When connecting the first 101 and second 103 energy storage arrangements to the frame 50, the first energy storage arrangement 101 is moved laterally in a first direction 62 towards the first frame member 52, and the second energy storage arrangement 103 is moved laterally in a second direction 64 towards the second frame member 54. The first 101 and second 103 energy storage arrangements are connected to the frame 50 by arranging each of the plurality of support brackets 80 in abutment with a corresponding vehicle frame support 70 of the first 52 and second 54 frame members.

Before arranging each of the plurality of support brackets 80 in abutment with the corresponding vehicle frame support 70, a plurality of first set of bars 90, of which only two bars are depicted in Fig. 2, is guided laterally through a respective hole 95 in the second energy storage arrangement 103 from a laterally inner side 93 to a laterally outer side 94 of the second energy storage arrangement 103. Each bar of the first set of the bars 90 is rotationally connected to a threaded sleeve 84, i.e. threaded to internal threads 85 of the threaded sleeve 84. The threaded sleeves 84 are rotationally fixed in the hole 95 at the laterally inner side 93. The exemplified threaded sleeves 84 comprises a pair of radially protruding portions 86 arranged in a corresponding recess 88 of the hole 95 to prevent the threaded sleeves 84 from rotating. Other means for preventing rotation are also conceivable, such as e.g. a threaded sleeve in the form of an oblong shaped nut arranged in a corresponding oblong portion of the hole 95, etc. A still further means for preventing rotation may be a threaded sleeve in the form of a hexagonal nut arranged in a corresponding hexagonal portion of the hole 95. When the first set of bars 90 is arranged laterally through the second energy storage arrangement 103, the bars of the first set of bars 90 can be fixated at the laterally outer side 94 of the second energy storage arrangement 103 by e.g. a nut (not shown) tightening the bars.

Thereafter, a second set of bars 90', of which only two bars are depicted in Fig. 2, is guided laterally through a respective hole 91 in the first energy storage arrangement 101 from a laterally outer side 92 to a laterally inner side 97 of the first energy storage arrangement 101. Each bar of the second set of bars 90' comprises a threaded portion 84'. The threaded portion 84' of the second set of bars 90' is, after the bars are guided laterally through the holes 91 in the first energy storage arrangement 101, threaded to a second set of the internal threads 85' of the threaded sleeve 84. Hereby, the first set of bars 90 is connected to the second set of bars 90' via the threaded sleeves 84. When the second set of bars 90' is connected to the sleeves 84, the bars 90' can be fixated at the laterally outer side 91 of the first energy storage arrangement 101 by e.g. a nut (not shown) tightening the bars.

The energy storage arrangement 100 may also comprise a plurality of guiding pins 40. The exemplified guiding pin 40 in Fig. 2 is arranged at the laterally inner side 97 of the first energy storage arrangement 101 and extends towards the second energy storage arrangement 103. The second energy storage arrangement 103 may comprise a corresponding plurality of guiding apertures 42 arranged at the laterally inner side 93 of the second energy storage arrangement 103. When connecting the first 101 and second energy storage arrangements to each other, the guiding pins 40 can assist the operator to correctly position the first energy storage arrangement 101 relative to the second energy storage arrangement 103 before guiding the second set of bars 90' laterally through the holes 91 of the first energy storage arrangement 101.

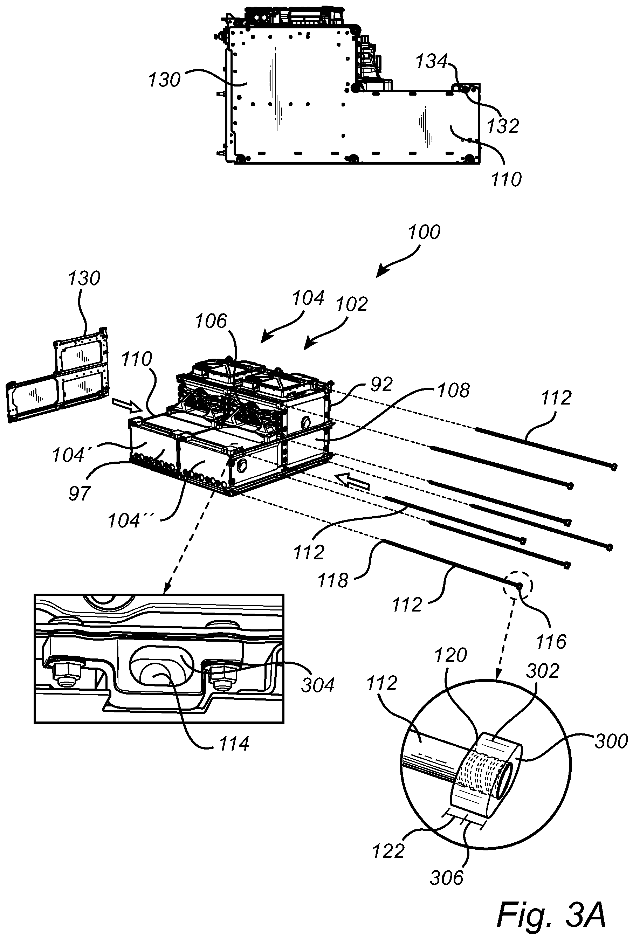

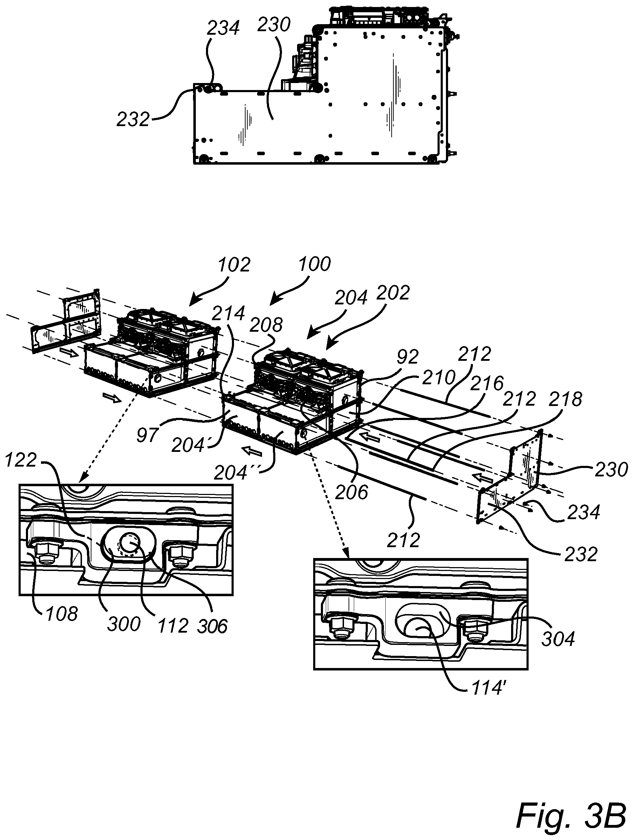

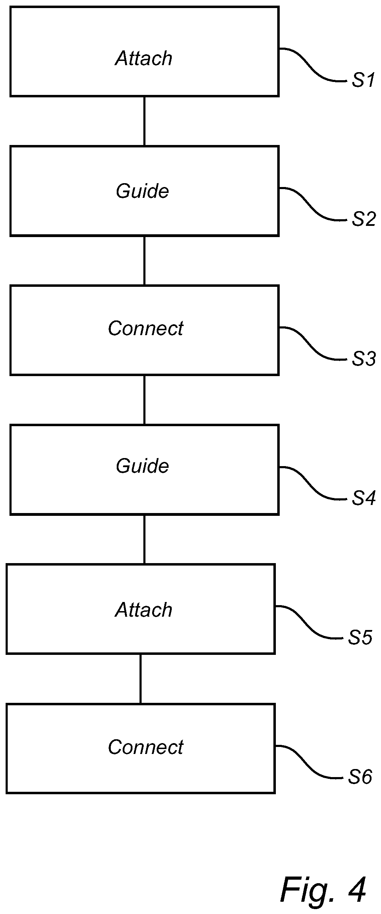

Each of the first 101 and second 103 energy storage arrangements may be formed by a first 102 and second 202 set of energy storage modules (see Fig. 3). In order to describe the connection between these first 102 and second 202 sets of energy storage modules, reference is made to Figs. 3A, 3B and 4. The following will describe the connection between the first 102 and second 202 sets of energy storage modules with reference to the first energy storage arrangement 101 which will be referred to as the energy storage arrangement 100.

Fig. 3A is an exemplary illustration of the first set of energy storage modules 102 of the energy storage arrangement 100 according to an example, Fig. 3B is an exemplary illustration of the first set of energy storage modules 102 and the second set of energy storage modules 202 of the energy storage arrangement 100 according to an example, and Fig. 4 is an exemplary flow chart of a method of assembling the energy storage arrangement 100 according to an example.

As exemplified in Fig. 3A, the energy storage arrangement 100 comprises a first set of energy storage modules 102. The first set of energy storage modules 102 comprises at least one energy storage module 104, in Fig. 3A exemplified as comprising a first 104' and a second 104" energy storage module. The first set of energy storage modules 102 comprises a first side surface 106 arranged to face the frame 50 of the vehicle 10 when the support brackets 80 are arranged in abutment with vehicle frame supports 70 as described above. The exemplified first side surface 106 is thus arranged on a laterally opposite side of at least a portion of the first set of energy storage modules 102 compared to the laterally outer side 92.

The first set of energy storage modules 102 also comprises a first end surface 108 and a second end surface 110. The first 108 and second 110 end surfaces are longitudinal end surfaces of the first set of energy storage modules 102 and the above described first side surface 106 extends longitudinally from the first end surface 108 to the second end surface 110. The first side surface 106 is preferably extending in parallel with the above described laterally inner side 97 and the laterally outer side 92 of the energy storage arrangement 100. As such, also the portions of the laterally inner side 97 and the laterally outer side 92 forming part of the first set of energy storage modules 102 extend longitudinally from the first end surface 108 to the second end surface 110.

As illustrated in Fig. 3A, the first set of energy storage modules 102 comprises a first rod 112. In detail, the first set of energy storage modules 102 may preferably comprise a plurality of first rods 112. The following will however, for simplifying for the skilled reader, describe the first rods 112 in relation to one of the first rods 112.

When assembling the first rod 112 to the first set of energy storage modules 102, a sleeve 300 is connected to the first rod 112. In particular, the sleeve 300 is attached S 1 to a first end portion 116 of the first rod 112. Preferably, the first end portion 116 of the first rod 112 may be threaded to internal threads 120 arranged at a first portion 122 of the sleeve 300. The first rod 112 is thereafter directed through a first through hole 114 of the first set of energy storage modules 102. In further detail, a second end portion 118 of the first rod 112, which second end portion 118 is arranged on an opposite axial end of the first rod 112 compared to the first end portion 116, is guided S2 through the first through hole 114. The second end portion 118 of the first rod 112 is guided from the first end surface 108 to the second end surface 110 until the sleeve 300 is arranged in the first through hole 114. As can be seen in Fig. 3B, a first portion 122 of the sleeve 300 is arranged in the through hole 114, and a second portion 306 of the sleeve 300 extends away from the through hole 114 in a direction away from the first end surface 108. The internal threads 120 of the sleeve 300 are preferably arranged in the first portion 122 of the sleeve 300 as well as in the second portion 306 of the sleeve 300.

The first rod 112 may hereby, when guided through the first set of energy storage modules 102, be arranged substantially in parallel with the first side surface 106 of the first set of energy storage modules 102.

When the sleeve 300 is arranged in the first through hole 114, the sleeve 300 may preferably be non-rotatably, i.e. rotationally fixedly, connected to the first through hole 114. As exemplified in Fig. 3A, the sleeve 300 comprises a first sleeve portion 302 which is arranged in a non-rotatable abutment with an abutment portion 304 of the first through hole 114. The first sleeve portion 302 thus comprises an envelope surface arranged in abutment with an internal surface of the abutment surface 304. The exemplified first sleeve portion 302 of the sleeve 300 in Fig. 3A is an oblong shaped portion arranged in abutment with an internal oblong shaped abutment portion 304 of the first through hole 114. The internal oblong shaped portion 304 of the first through hole 114 comprises flat surface portions that will prevent the sleeve from rotating. Other shapes of the sleeve 300 to obtain the non-rotatable connection to the first through hole 114 are also conceivable. For example, the sleeve 300 may be designed in a similar manner as the threaded sleeve 84 described above and depicted in Fig. 2. In such case, the sleeve 300 may comprises a pair of radially protruding portions arranged in a corresponding recess of the first through hole 114 to prevent the sleeves 300 from rotating.

When the first rod 112 has been guided through the second side surface 110, a first protection plate 130 may be attached to the second end surface 110 of the first set of energy storage modules 102. The first rod 112 is thus additionally guided through a first opening 132 of the first protection plate 130. The second end portion 118 of the first rod 112 is thereafter connected S3 to the second end surface 110 of the first set of energy storage modules 102. Preferably, a first nut 134 is used to connect the second end portion 118 of the first rod 112 to the second end surface 110, whereby the first nut 134 is arranged at a surface of the first protection plate 130 facing away from the second end surface 110. Since the sleeve 300, to which the first end portion 116 of the first rod 112 is threadedly connected, is non-rotatably connected to the first through hole 114, i.e. rotationally fixed to the first through hole 114, the nut can be tightened without having to use a resistive force at the first end surface 108. Also, the first protection plate 130 can hereby be sandwiched between the first nut 134 and the second end surface 110 of the first set of energy storage modules 102, thereby fixedly attached to the first set of energy storage modules 102.

Turning now in particular to Fig. 3B, which illustrates the above described first set of energy storage modules 102. Fig. 3B also illustrates a second set of energy storage modules 202 forming part of the energy storage arrangement 100. The second set of energy storage modules 202 comprises, in a similar vein as the above described first set of energy storage modules 102, at least one energy storage module 204, in Fig. 3B exemplified as comprising a first 204' and a second 204" energy storage module. The second set of energy storage modules 202 comprises a second side surface 206 arranged to face the frame 50 of the vehicle 10 when the support brackets 80 are arranged in abutment with vehicle frame supports 70 as described above. The exemplified second side surface 206 is thus arranged on a laterally opposite side of at least a portion of the first set of energy storage modules 102 compared to the laterally outer side 92.

The second set of energy storage modules 202 also comprises a first end surface 208 and a second end surface 210. The first 208 and second 210 end surfaces are longitudinal end surfaces of the second set of energy storage modules 202 and the second side surface 206 of the second set of energy storage modules 202 extends longitudinally from the first end surface 208 to the second end surface 210. The second side surface 206 is preferably extending in parallel with the above described laterally inner side 97 and the laterally outer side 92 of the energy storage arrangement 100. As such, also the portions of the laterally inner side 97 and the laterally outer side 92 forming part of the second set of energy storage modules 202 extend longitudinally from the first end surface 208 to the second end surface 210 of the second set of energy storage modules 202. As can be seen in Fig. 3B, the first end surface 208 of the second set of energy storage modules 202 face the first end surface 108 of the first set of energy storage modules 102.

As illustrated in Fig. 3B, the second set of energy storage modules 202 comprises a second rod 212. In detail, the second set of energy storage modules 202 may preferably comprise a plurality of second rods 212. The following will however, for simplifying for the skilled reader, describe the second rods 212 in relation to one of the second rods 212. The second rod 212 comprises a first 216 and a second 218 end portion arranged at opposite axial ends of the second rod 212. The first 216 and second 218 end portions of the second rod 212 may preferably have external threads.

The second set of energy storage modules 202 is, as depicted in Fig. 3B connected to the first set of energy storage module 102, which will now be described in further detail. As described above, the first rod 112 is connected to the first set of energy storage modules 102 such that the sleeve 300 is arranged in the first through hole 114. The second set of energy storage modules 202 is moved towards the first set of energy storage modules 102, i.e. the first end surface 208 of the second set of energy storage modules 202 is moved towards the first end surface 108 of the first set of energy storage modules 102. The second rod 212 is directed through an aperture 114' arranged at the second end surface 210 of the second set of energy storage modules 202. The second rod 212 is further directed through a second through hole 214 of the second set of energy storage modules 202, wherein the second through hole 214 is arranged at the first end surface 208 of the second set of energy storage modules 202. In further detail, a first end portion 216 of the second rod 212 is guided S4 through the second through hole 214. The first end portion 216 of the second rod 212 is guided from the second end surface 210 to the first end surface 208 of the second set of energy storage modules until the first end portion 216 arrives at the sleeve 300. Although not depicted, the second through hole 214 may be designed in a similar shape as the surface 304 of the first through hole 114.

The first end portion 216 of the second rod 212 is thereafter attached S5 to the sleeve 300. In particular, the first end portion 216 may preferably be threaded to the second portion 306 of the sleeve 300 by rotating the second rod 212 from a position at the second end surface 210 of the second set of energy storage modules 202. The second portion 306 of the sleeve 300 may at this stage be arranged in the second through hole 214.

The second rod 212 may hereby, when guided through the second set of energy storage modules 202, be arranged substantially in parallel with the second side surface 206 of the second set of energy storage modules 202.

When the second rod 212 has been guided through the second set of energy storage modules 202, a second protection plate 230 may be attached to the second end surface 210 of the second set of energy storage modules 202. The second rod 212 is thus additionally guided through a second opening 232 of the second protection plate 230. The second end portion 218 of the second rod 212 is thereafter connected S6 to the second end surface 210 of the second set of energy storage modules 202. Preferably, a second nut 234 is used to connect the second end portion 218 of the second rod 212 to the second end surface 210, whereby the second nut 234 is arranged at a surface of the first protection plate 230 facing away from the second end surface 210 of the second set of energy storage modules 202. Since the sleeve 300, to which the first end portion 216 of the second rod 212 is threadedly connected, is non-rotatably connected to the first through hole 114 as described above, the second nut 234 can be tightened without having to use a resistive force at the interface between the first end surfaces of the first 102 and second 202 set of energy storage modules. Also, the second protection plate 230 can hereby be sandwiched between the second nut 234 and the second end surface 210 of the second set of energy storage modules 202, thereby fixedly attached to the second set of energy storage modules 202.

In the assembled configuration, the first 102 and second 202 sets of energy storage modules are tightly fixated to each other using the above described first 112 and second 212 rods connected to each other at the sleeve 300. The sleeve 300 is hereby arranged in the first 114 and second 214 through holes. As indicated above, the sleeve 300 is arranged through the first end surface 108 of the first set of energy storage modules 102 and through the first end surface 208 of the second set of energy storage modules 202 and connected to the first 112 and second 212 rods.

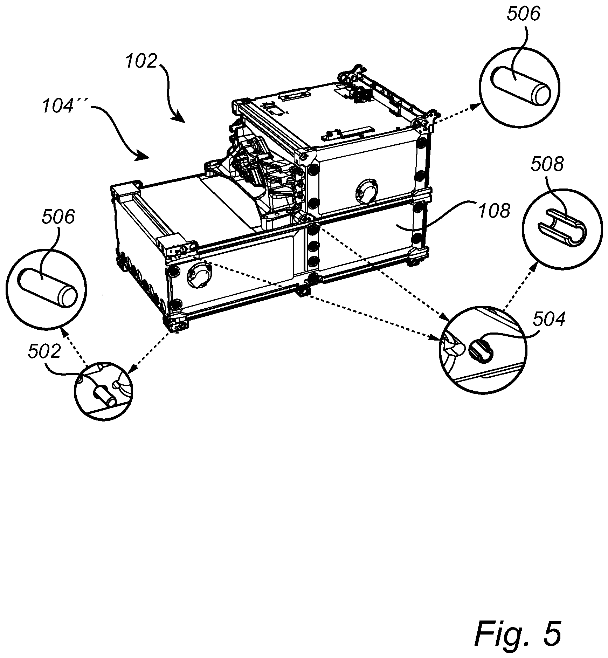

Reference is now made to Fig. 5 which is an exemplary illustration of one energy storage module 104" of the first set of energy storage modules 102. In particular, Fig. 5 illustrates the energy storage module 104" comprising the above described first end surface 108. As can be seen in Fig. 5, the first end surface 108 of the first set of energy storage modules 102 comprises at least one aperture 502, 504. Further, the energy storage arrangement 100 further comprises as least one guiding pin 506, 508 which is arranged in the at least one aperture 502, 504.

Although not depicted in Fig. 5, the first end surface 208 of the second set of energy storage modules 202 may advantageously also comprises at least one aperture. The at least one guiding pin 506, 508 is thus, when the first set of energy storage modules 102 and the second set of energy storage modules 202 are assembled to each other, arranged also in the at least one aperture of the first end surface 208 of the second set of energy storage modules 202.

In the exemplification of Fig. 5, the at least one guiding pin 506, 508 may comprise a shear pin 506 and/or a spring pin 508. The guiding pin may advantageously serve the dual purpose of guiding the second set of energy storage modules 202 to connect to the first set of energy storage modules 102 at a desired position, as well as to support the energy storage arrangement 100 from shear loads acting in the interface between the first 102 and second 202 sets of energy storage modules during operation of the vehicle 10.

### EXAMPLE LIST

Example 1: An energy storage arrangement for a vehicle, the energy storage arrangement comprising: a first set of energy storage modules comprising at least one energy storage module, the first set of energy storage modules comprising a first side surface, a first end surface, and a second end surface, wherein the first side surface extends between the first and second end surfaces of the first set of energy storage modules, a first rod arranged in a first through hole of the first set of energy storage modules, the first rod extending between the first and second end surfaces of the first set of energy storage modules, a second set of energy storage modules comprising at least one energy storage module, the second set of energy storage modules comprising a second side surface, a first end surface, and a second end surface, wherein the second side surface extends between the first and second end surfaces of the second set of energy storage modules, wherein the first end surface of the first set of energy storage modules face the first end surface of the second set of energy storage modules, a second rod arranged in a second through hole of the second set of energy storage modules, the second rod extending between the first and second end surfaces of the second set of energy storage modules, wherein the energy storage arrangement further comprises a sleeve arranged in the first and second through holes, the sleeve being arranged through the first end surface of the first set of energy storage modules and through the first end surface of the second set of energy storage modules and is connected to the first and second rods.

Example 2. The energy storage arrangement of example 1, wherein the sleeve is non-rotatably connected to the first through hole.

Example 3. The energy storage arrangement of example 2, wherein the sleeve comprises a first sleeve portion arranged in a non-rotatable abutment with an abutment portion of the first through hole.

Example 4. The energy storage arrangement of any one of examples 2 or 3, wherein the first portion is an oblong shaped portion arranged in abutment with the abutment portion of the first through hole, the abutment portion of the first through hole being an internal oblong shaped abutment portion.

Example 5. The energy storage arrangement of any one of the preceding examples, wherein the first and second rods are connected to internal threads of the sleeve.

Example 6. The energy storage arrangement of example 5 when dependent on any one of examples 3 or 4, wherein the sleeve comprises a first portion and a second portion, the first sleeve portion forming part of the first portion, wherein the internal threads are arranged at the second portion of the sleeve, the second portion extending away from the first through hole.

Example 7. The energy storage arrangement of any one of the preceding examples, wherein the first end surface of the first set of energy storage modules comprises at least one aperture, and a guiding pin arranged in the at least one aperture.

Example 8. The energy storage arrangement of example 7, wherein the first end surface of the second set of energy storage modules comprises at least one aperture, wherein the guiding pin is arranged in the at least one aperture of the first end surface of the second set of energy storage modules.

Example 9. The energy storage arrangement of any one of the preceding examples, wherein the first set of energy storage modules comprises two energy storage modules.

Example 10. The energy storage arrangement of any one of the preceding examples, wherein the second set of energy storage modules comprises two energy storage modules.

Example 11. The energy storage arrangement of any one of the preceding examples, wherein the energy storage arrangement further comprises a first protection plate attached to the second end surface of the first set of energy storage modules.

Example 12. The energy storage arrangement of example 11, wherein the first rod is arranged through a first opening of the first protection plate, the first protection plate being attached to the second end surface of the first set of energy storage modules by a nut connected to the first rod.

Example 13. The energy storage arrangement of any one of the preceding examples, wherein the energy storage arrangement further comprises a second protection plate attached to the second end surface of the second set of energy storage modules.

Example 14. The energy storage arrangement of example 13, wherein the second rod is arranged through a second opening of the second protection plate, the second protection plate being attached to the second end surface of the second set of energy storage modules by a nut connected to the second rod.

Example 15. The energy storage arrangement of any one of the preceding examples, wherein the first rod is arranged in parallel with the first side surface of the first set of energy storage modules.

Example 16. The energy storage arrangement of any one of the preceding examples, wherein the second rod is arranged in parallel with the second side surface of the second set of energy storage modules.

Example 17. A vehicle comprising an energy storage arrangement according to any one of the preceding examples.

Example 18. A method of assembling an energy storage arrangement, the energy storage arrangement comprising a first set of energy storage modules comprising at least one energy storage module and a second set of energy storage modules comprising at least one energy storage module, the method comprising attaching a sleeve to a first end portion of a first rod, guiding a second end portion of the first rod through a first through hole of the first set of energy storage modules, the second end portion being guided from a first end surface to a second end surface of the first set of energy storage modules until the sleeve is arranged in the first through hole, the first and second end portions of the first rod being arranged on opposite ends of the first rod, connecting the second end portion of the first rod to the second end surface of the first set of energy storage modules, guiding a first end portion of a second rod through a second through hole of the second set of energy storage modules, the first end portion being guided from a second end surface to a first end surface of the second set of energy storage modules, attaching the first end portion of the second rod to the sleeve, and connecting the second end portion of the second rod to the second end surface of the second set of energy storage modules, the first and second end portions of the second rod being arranged on opposite ends of the second rod.

Example 19. The method of example 18, further comprising guiding the second end portion of the first rod through a first protection plate, and connecting the second end portion of the first rod to the second end surface of the first set of energy storage modules by attaching a first nut to the second end portion of the first rod to sandwich the first protection plate between the first nut and the second end surface of the first set of energy storage modules.

Example 20. The method of any one of examples 18 or 19, further comprising guiding the first end portion of the second rod through a second protection plate, and connecting the second end portion of the second rod to the second end surface of the second set of energy storage modules by attaching a second nut to the second end portion of the second rod to sandwich the second protection plate between the second nut and the second end surface of the second set of energy storage modules.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An energy storage arrangement (100) for a vehicle, the energy storage arrangement comprising:
- a first set of energy storage modules (102) comprising at least one energy storage module (104), the first set of energy storage modules comprising
- a first side surface (106), a first end surface (108), and a second end surface (110), wherein the first side surface extends between the first and second end surfaces of the first set of energy storage modules,
- a first rod (112) arranged in a first through hole (114) of the first set of energy storage modules, the first rod extending between the first and second end surfaces of the first set of energy storage modules,
- a second set of energy storage modules (202) comprising at least one energy storage module (204), the second set of energy storage modules comprising
- a second side surface (206), a first end surface (208), and a second end surface (210), wherein the second side surface extends between the first and second end surfaces of the second set of energy storage modules, wherein the first end surface of the first set of energy storage modules face the first end surface of the second set of energy storage modules,
- a second rod (212) arranged in a second through hole (214) of the second set of energy storage modules, the second rod extending between the first and second end surfaces of the second set of energy storage modules,
wherein the energy storage arrangement further comprises a sleeve (300) arranged in the first and second through holes, the sleeve being arranged through the first end surface of the first set of energy storage modules and through the first end surface of the second set of energy storage modules and is connected to the first and second rods.

2. The energy storage arrangement of claim 1, wherein the sleeve is non-rotatably connected to the first through hole.

3. The energy storage arrangement of claim 2, wherein the sleeve comprises a first sleeve portion arranged (302) in a non-rotatable abutment with an abutment portion(304) of the first through hole.

4. The energy storage arrangement of any one of claims 2 or 3, wherein the first sleeve portion (302) is an oblong shaped portion arranged in abutment with the abutment portion (304) of the first through hole, the abutment portion (304) of the first through hole being an internal oblong shaped abutment portion.

5. The energy storage arrangement of any one of the preceding claims, wherein the first and second rods are connected to internal threads of the sleeve.

6. The energy storage arrangement of claim 5 when dependent on any one of claims 3 or 4, wherein the sleeve comprises a first portion and a second portion, the first sleeve portion forming part of the first portion, wherein the internal threads are arranged at the second portion of the sleeve, the second portion extending away from the first through hole.

7. The energy storage arrangement of any one of the preceding claims, wherein the first end surface of the first set of energy storage modules comprises at least one aperture, and a guiding pin arranged in the at least one aperture.

8. The energy storage arrangement of claim 7, wherein the first end surface of the second set of energy storage modules comprises at least one aperture, wherein the guiding pin is arranged in the at least one aperture of the first end surface of the second set of energy storage modules.

9. The energy storage arrangement of any one of the preceding claims, wherein the first set of energy storage modules comprises two energy storage modules.

10. The energy storage arrangement of any one of the preceding claims, wherein the energy storage arrangement further comprises a first protection plate attached to the second end surface of the first set of energy storage modules.

11. The energy storage arrangement of any one of the preceding claims, wherein the energy storage arrangement further comprises a second protection plate attached to the second end surface of the second set of energy storage modules.

12. A vehicle comprising an energy storage arrangement according to any one of the preceding claims.

13. A method of assembling an energy storage arrangement (100), the energy storage arrangement comprising a first set of energy storage modules (102) comprising at least one energy storage module (104) and a second set of energy storage modules (202) comprising at least one energy storage module (204), the method comprising:
- attaching (S 1) a sleeve (300) to a first end portion (116) of a first rod (112),
- guiding (S2) a second end portion (118) of the first rod through a first through hole (114) of the first set of energy storage modules, the second end portion being guided from a first end surface (108) to a second end surface (110) of the first set of energy storage modules until the sleeve is arranged in the first through hole (114), the first and second end portions of the first rod being arranged on opposite ends of the first rod,
- connecting (S3) the second end portion (118) of the first rod (112) to the second end surface of the first set of energy storage modules,
- guiding (S4) a first end portion (216) of a second rod (212) through a second through hole (214) of the second set of energy storage modules, the first end portion being guided from a second end surface to a first end surface of the second set of energy storage modules,
- attaching (S5) the first end portion (216) of the second rod (212) to the sleeve (300), and
- connecting (S6) the second end portion (218) of the second rod (212) to the second end surface of the second set of energy storage modules, the first and second end portions of the second rod being arranged on opposite ends of the second rod.

14. The method of claim 13, further comprising:
- guiding the second end portion of the first rod through a first protection plate, and
- connecting the second end portion of the first rod to the second end surface of the first set of energy storage modules by attaching a first nut to the second end portion of the first rod to sandwich the first protection plate between the first nut and the second end surface of the first set of energy storage modules.

15. The method of any one of claims 13 or 14, further comprising:
- guiding the first end portion of the second rod through a second protection plate, and
- connecting the second end portion of the second rod to the second end surface of the second set of energy storage modules by attaching a second nut to the second end portion of the second rod to sandwich the second protection plate between the second nut and the second end surface of the second set of energy storage modules.
